(19)

**Europäisches Patentamt**

**European Patent Office**

**Office européen des brevets**

(11) **EP 4 787 649 A1**

(12) **EUROPEAN PATENT APPLICATION**

(43) Date of publication:
05.08.2026 Bulletin 2026/32

(21) Application number: 25155342.6

(22) Date of filing: 31.01.2025

(51) International Patent Classification (IPC):
*H02J 3/00* (2026.01) *H02J 13/00* (2026.01)

(52) Cooperative Patent Classification (CPC):
**H02J 3/00; H02J 3/0012; H02J 13/12;**
H02J 2103/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **LARSSON, Mats**
**5102 Rupperswil (CH)**
• **SHCHETININ, Dmitry**
**5600 Lenzburg (CH)**

(74) Representative: **Vossius & Partner**
**Patentanwälte Rechtsanwälte mbB**
**Siebertstraße 3**
**81675 München (DE)**

(54) **FREQUENCY RESPONSE PREDICTION BASED ON AMBIENT MEASUREMENTS**

(57) The disclosure provides a method for creating a model for predicting frequency responses in a power grid and/or for inertia estimation in the power grid, the method comprising: acquiring a plurality of node data, wherein each of the plurality of node data represents a frequency time series at a corresponding node of a plurality of nodes of the power grid in an ambient state; grouping the plurality of nodes into clusters, wherein each of the clusters comprises at least one of the plurality of nodes; creating a node data average for each of the clusters based on the node data of the nodes comprised by the corresponding cluster; and creating the model based on the node data averages.

Fig. 1

EP 4 787 649 A1

**Description**

The present disclosure relates to method for creating a model for predicting frequency responses in a power grid, as well as a corresponding computer program and a corresponding data processing apparatus.

Power grids are important infrastructure components. Most installed power grids are set up as alternating current (AC) grids having a grid frequency. The grid frequency may vary from one grid to another but is typically set to have a defined value for any region of deployment.

Large disturbances may cause changes in grid frequency. Such changes in grid frequency can be problematic and can affect stability, efficiency, and safety of the power grid. Such large disturbances may be caused by, e.g., disconnection of major generators or tie-lines to other network areas (tie line outages), or load rejection (load outages).

After a large disturbance that shifts the balance between mechanical and electric energy in the power grid, the grid frequency shows an initial excursion from its nominal value and then often recovers close to its nominal value through a combination of automatic control action and active redispatch of the remaining generation. The dynamics of this change in grid frequency as a function of time is important, and it is generally desired to reduce the change in grid frequency as much as possible.

EP 4 429 060 A1 discloses a method of acquiring processing measurements in a power grid, the method being performed by a processing system and comprising: causing a large disturbance to be introduced into the power grid in accordance with large disturbance parameters determined by the processing system, receiving data comprising frequency data, wherein the frequency data represent a grid frequency measured at one or several locations in the power grid, and processing the received data to determine, for at least a part of the power grid, at least one response parameter that affects a grid frequency response of at least the part of the power grid to a further large disturbance.

This introduced large disturbance has the disadvantage of not being able to continuously produce an inertia estimate. It would be advantageous to identify the risk of potentially harmful frequency excursion before they occur, based on ambient data, rather than when the large disturbances and frequency excursions have already been experienced.

The above-mentioned disadvantages are at least partly overcome and/or advantages mentioned herein are at least partly achieved with the features of the independent claims. Dependent claims define preferred embodiments of the present disclosure.

The present disclosure shows several methods for creating a model for predicting frequency responses in a power grid, as well as a corresponding computer program and a corresponding data processing apparatus. Examples, alternatives, advantages and other explanations for these overlapping features are generally only explained once but also apply to the other embodiments.

The present disclosure relates to a method for creating a model for predicting frequency responses in a power grid and or for inertia estimation in the power grid, the method comprising: acquiring a plurality of node data, wherein each of the plurality of node data represents a frequency time series at a corresponding node of a plurality of nodes of the power grid in an ambient state; grouping the plurality of nodes into clusters, wherein each of the clusters comprises at least one of the plurality of nodes; creating a node data key value for each of the clusters based on the node data of the nodes comprised by the corresponding cluster; and creating the model based on the node data key values.

The power grid may be a local power grid or a regional power grid. The power grid may be a national power grid or a power grid extending over several countries, as for example a continent. Alternatively, the power grid may be a local power grid of a city, an industrial site, construction site or the like. The power grid may be self-contained, meaning that the power grid comprises all sources, load, and nodes, without any connections to external networks (other power grids). Alternatively, the power grid may comprise one or more connections to external networks, each of which may feed or drain power.

The frequency responses may be how the frequency of the power grid reacts on a disturbance. The frequency response may refer to the power grid's ability to maintain a stable frequency, typically 50 Hz or 60 Hz, despite fluctuations, like disturbances, in supply and demand. The frequency response may be at one or more node, or it may be for the whole power grid.

Additional or alternative to inertia estimation, one or more of the following can be estimated: governor steady state droop and time constant.

The grouping of the nodes into clusters and/or the creating of node data key value (may be called "node data averages". The "node data average" is an example of the "node data key value" throughout the disclosure. Therefore, exchanging the node data average in the described with node data key value is possible) simplifies the calculations. This may decrease operations in a processor. The use of data from an ambient state needs implies that no large disturbances such as tie-line or generator trips are needed, and therefor new estimates can be provided continuously. Moreover, no artificial large disturbances needs to be introduced.

Various embodiments may preferably implement the following features.

Preferably, the node data represent the frequency time series at the corresponding node of the power grid in the ambient state are node data of the power grid functioning without disturbances, preferably meaning large disturbances.

This may also or alternatively mean the node data represent the frequency time series at the corresponding node of the power grid in the ambient state are node data of the power grid during normal operation.

The frequency time series may be a series of frequency measurements, wherein the series may be consecutive time steps. The frequency measurements may be a Fourier transformed voltage measurement, a Fourier transformed current measurement, or be obtained from synchrophasor measurement units.

Preferably, (large) disturbances include generator outages, load outages and tie line outages.

The ambient state may mean at least one of the following: an undisturbed state, including only small noise, including only small variations. This may mean that the node data are data of the power grid, at the corresponding node, with small noise and/or showing only small variations and/or representing the power grid in an undisturbed state. In some embodiments, the ambient state may comprise small noise comprising small disturbances. These small disturbances are typically provided by the natural load variations but may also or alternatively be disconnection of small generators or tie-lines to other small network areas (tie line outages), or a small load rejection (load outages). Small may mean less than a predefined threshold, for example compared to the overall load of the power grid. In an example, a small disturbance may result from disconnection of a small generator which generates less than 1 % of the overall power, or from a small load rejection which consumes less than 1 % of the power. These small disturbances may be smaller than large disturbances (theoretical) introduced into the model and of which the frequency response may be simulated. Hence, the created model may be configured to predict frequency responses on bigger disturbances than seen before (in the acquired node data in the ambient state). Small noise and/or small variations may be noise and/or variation, respectively, which have an influence of less than 1% of the signal. This may be 1% of the amplitude and/or 1% phase shift.

Preferably, the plurality of node data is a plurality of measurements acquired by sensors, wherein each sensor corresponds to a corresponding node.

In some embodiments, there are some nodes of the plurality of node without a sensor. Preferably, these nodes do not contribute node data.

Preferably, the sensors are synchrophasor measurement units, PMUs.

PMU may also or alternatively stand for phase measurement units. Each PMU may be an A-D (analog to digital) converter that monitors voltage or current. Synchrophasors may be timestamped phase measurements of voltages or currents. The node data may be synchrophasors.

Alternatively, other frequency sensors may be used. Preferably, the frequency sensors are configured to provide time-stamped frequency estimates. One example of such another frequency sensor is linear state estimation (LSE).

These possibilities can make the method more robust against communication or sensor outages since it can reconstruct the flows in each network component.

Preferably, the plurality of node data represents frequency time series of time series of 5 to 15 minutes, preferably of 10 minutes; and/or wherein plurality of node data represents frequency time series with an acquisition rate of 10 to 240 Hz.

In embodiments, the acquisition rate may be 10 Hz, or 50 Hz, or 60 Hz, or 200 Hz, or 240 Hz.

Preferably, the plurality of node data further comprises ambient load data.

The node data may be ambient load data. The ambient data may comprise no data representing a large disturbance, or at least no data representing a not small disturbance.

Preferably, the clusters correspond to connected local regions, wherein the nodes of a cluster are located in a corresponding connected local region, and wherein the node data of nodes of a same cluster are more coherent to each other than to node data of nodes of different clusters.

The connected local regions may be zones. "Local" may mean that the regions are local, and preferably not frequency regions or the like. "Connected" may mean that there are not two unconnected patches belonging to the same cluster. Preferably, no node is in more than one cluster.

Preferably, a number of clusters is predefined or the method further comprises determining the number of clusters based on coherency of the frequency time series of the nodes.

The allocation of the nodes into the clusters may be predefined. In an alternative, nodes with node data with a coherency under a threshold may be part of a same cluster, while nodes with node data with a coherency over the threshold may not be part of the same cluster. In some embodiments, the number of clusters may be determined using special measures. These special measures compare intra-cluster distances to inter-cluster distances. An example of a special measure is Calinski-Harabasz score. Alternatively, the number of clusters may be selected by varying the number of clusters from a lower limit (like 1) to an upper limit (like the square root of the number of nodes) and for each cluster number, a clustering quality separation to the within-cluster dispersion may be quantified. The within-cluster dispersion may be normalized by the number of degrees of freedom. The cluster number with the best computed score value may be selected.

In an alternative, nodes within a local distance of each other are in one cluster, while nodes further away are not the one cluster. This would apply for each of the plurality of clusters. This may make determining clusters easier. It may still have a good outcome because locally close nodes are often more coherent. In another alternative, nodes which are electrically close are in one cluster. This would apply to each of the plurality of clusters. Electrically close may mean that there is little conductive wire distance between the end points.

In an alternative, the cluster allocation of the nodes may be done as follows: first, the number of clusters may be determined, for example by a predetermined number. Then, the cluster centers may be determined. This may be done by randomly selecting certain measurement time series (/nodes) to be the cluster centers. Then, an iterative algorithm with the following two steps may be applied: As first iterative step, each measurement time series may be assigned to the cluster, whose center has the smallest distance to this time series. The distance may be computed by e.g., using Euclidean distance or other metrics, which may be applied to either raw time series or their processed version (with removed low-frequency trend, clipped duration, etc.). As second iterative step, the center of each cluster may be recalculated, e.g., as the average over all time series currently assigned to the cluster. The iterative algorithm may continue until the time series assignments no longer change.

Such cluster allocation may be done by analyzing a single-line diagram of the power grid. Alternatively, the node allocation into the clusters may be done using time series clustering techniques, as for example k-means.

Preferably, creating the node data average (key value) for each of the clusters based on the node data of the nodes comprised by the corresponding cluster is done by averaging over all frequencies in the corresponding cluster.

The average may be an arithmetic mean ($\frac{1}{n}\sum_{i=1}^{n} x_i$; with n being the number of nodes, $x_i$ being the frequency of the $i^{th}$ node in the cluster) or a square mean ($\sqrt{\frac{1}{n}\sum_{i=1}^{n} x_i^2}$) or another mean, like a higher order mean of order 3 or more ($\sqrt[k]{\frac{1}{n}\sum_{i=1}^{n} x_i^k}$; with k being the order; different k than used further down). In some embodiments, weighed means are used. The weight may depend on the amount of voltage or current generated or consumed. In other embodiments, the means are not weighed.

Preferably, the method further comprises acquiring a frequency time series representing an external network; and wherein creating the model is further based on the frequency time series representing the external network.

Using such an external network may be done to simplify the power grid. The external network may replace a sub-grid comprising a plurality of generators and loads. This may decrease calculation processes as well as reducing the measurement data requirements as only power flow measurements into or out of the external grid are needed. An external network may be used for nodes which are not interesting for the case at hand, or for parts of the network where measurements are not available. In some embodiments, the external network may be one cluster. An external network may be modelled the same way as a generator or a load.

Preferably, the model is a higher order linear model.

In some embodiments, the model is a multiple input, multiple output (MIMO) model. Inputs may be the input parameters per zone. Inputs/Outputs which may be used are one or more of: active power, both active and reactive power (yielding two inputs per zone), total load conductance, total load conductance and susceptance (again yielding two inputs per zone). For the outputs frequency per zone (one output per zone) may be considered.

Preferably, creating the model based on the node data averages (key values) is done using sub-space identification, system identification or a machine learning algorithm.

This may apply for cases of a linear model, as well as for cases or a non-linear model. The model may be linear or non-linear.

Preferably, the method further comprises predicting a frequency response of the power grid by applying a power grid disturbance to the model.

Simulating instead of predicting is done in some embodiments. In the case of using the model to create the frequency response, the model may be only for predicting frequency responses in a power grid and not for inertia estimation in the power grid.

The (simulated) power grid disturbance may be one of disconnection of a generator or load, or an outage of a tie line to an external network or external system. The disturbance may be bigger than any effect resulting in the ambient state, like the noise in the node data in the ambient state. The disturbance may be bigger by a factor of 10 or 100 or more, or in between 10 and 100. The power grid disturbance applied to the model is preferably a large disturbance.

Preferably, the method further comprises instructing the power grid based on the simulated frequency response.

This may (further) comprise performing corrective action of the power grid or one node of the power grid, when the simulated frequency response is unacceptable. Such a corrective action may be to maintain the generator or load of the predicted disturbance connected to the power grid. Instructing the power grid based on the simulated frequency response may comprise creating a control signal for instructing the power grid.

Preferably, the method further comprises determining inertia of at least one cluster of the power grid based on the model.

This may further or alternatively comprise determining inertia of the (entire) power grid based on the model. The inertia of the power grid may be determined by adding the inertias of each cluster of the power grid. Alternatively, the inertia of the power grid may be determined from the model without determining the inertias of the clusters.

Using the model to determine inertia may comprise that the model is for inertia estimation in the power grid and not for predicting frequency responses in a power grid. The model may be for determining inertia, or for determining the frequency response, or for both. Based on the estimated MIMO model, it can be reduced into multiple SISO (Single Input, Single Output) models - one for each zone. From the SISO model for each zone, the zone inertia may be extracted. As already mentioned, the total (system) inertia can be calculated by summing the calculated zone inertias.

Preferably, the method further comprises instructing the power grid based on the determined inertia.

This may (further) comprise performing corrective action of the power grid or one node of the power grid, when the determined inertia is unacceptable.

The present disclosure also relates to a computer program comprising instructions which, when the computer program is executed by a computer, cause the computer to carry out the method as described above.

The present disclosure also relates to a data processing apparatus comprising a processor configured to: receive a plurality of node data, wherein each of the plurality of node data represents a frequency time series at a corresponding node of the power grid in an ambient state; group the plurality of nodes into clusters, wherein each of the clusters comprises at least one of the plurality of nodes; create node data key values for each of the clusters based on the node data of the nodes comprised by the corresponding cluster; and create a model for predicting frequency responses in a power grid and/or for inertia estimation in the power grid based on the node data key values.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.

Fig. 1 shows an overview over the method for creating and using the model(s).

Fig. 2 shows a diagram of a power grid and an external network.

Fig. 3 shows a possible clustering.

Fig. 4 shows the results for a case when a network like in fig. 2 has been split into 4 zones and the estimated model order becomes 4.

Fig. 5 shows predictions of frequency responses based on ambient data (pre-disturbed injections).

Fig. 6 shows a method for creating a model for predicting frequency responses in a power grid and/or for inertia estimation in the power grid.

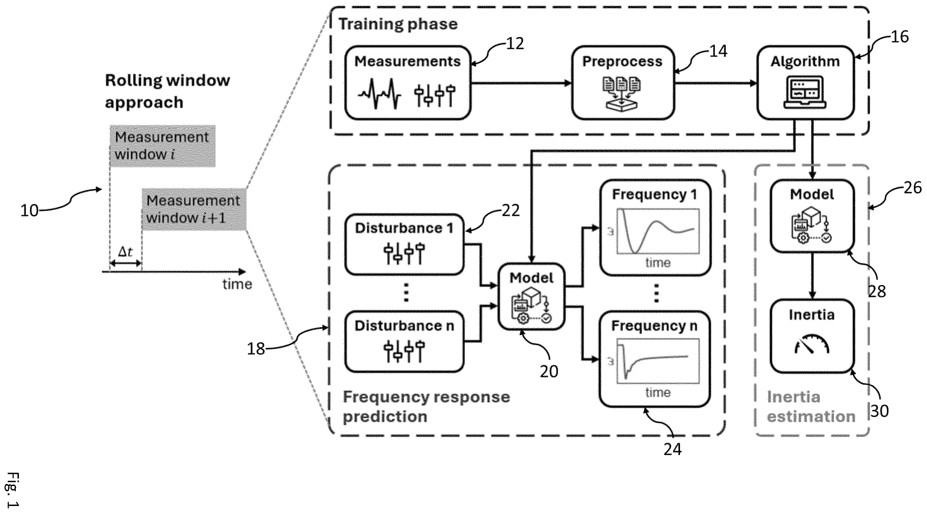

Fig. 1 shows an overview over the method for creating and using the model(s). A method for predicting the frequency response in the entire grid or zones of the grid using measurement data taken from ambient, i.e., pre-disturbance data, is shown. Furthermore, the method extracts information of the zonal or system inertia based on the identified model. As shown in fig 1 the method consists of the following steps:

At 10 and 12, measurements (node data) are acquired where measurements from ambient power system operation are collected over a window of several minutes (maybe around 10 minutes). There are corresponding measurements for each node of the power grid.

The main input of the algorithm shown in fig. 1 may be power-grid-wide measurements (node data, frequency time series) of ambient frequency $\omega_k$, from as many as possible of the power grids n nodes along with measurements of active and reactive power injections from each load and generator as well as tie lines to external areas if present. Such measurements can be collected directly from synchrophasor measurement units (PMUs) or a linear state estimation (LSE), which can make the method more robust against communication or sensor outages since it can reconstruct the flows in each network component, provided the network is fully observable. An update rate of input measurements may be 10-50 Hz and the length of the sliding windows may be 5-15 minutes. In the following active and reactive power time series from node k are denoted $p_k$ and $q_k$, respectively.

Also, zones are defined, where the frequency variations observed under ambient conditions are analyzed to identify coherency and define zones. The zones may represent regions comprising nodes of the same cluster. Such clusters may be formed by time domain clustering techniques, like k-means. The time domain clustering techniques may be used to identify zones in which the frequency behavior (of the nodes in the zone) are coherent (within a certain range). Further, pseudo-measurements (like node data averages/ node data key values) representing the frequency behavior in different parts (zones/clusters) of the power grid.

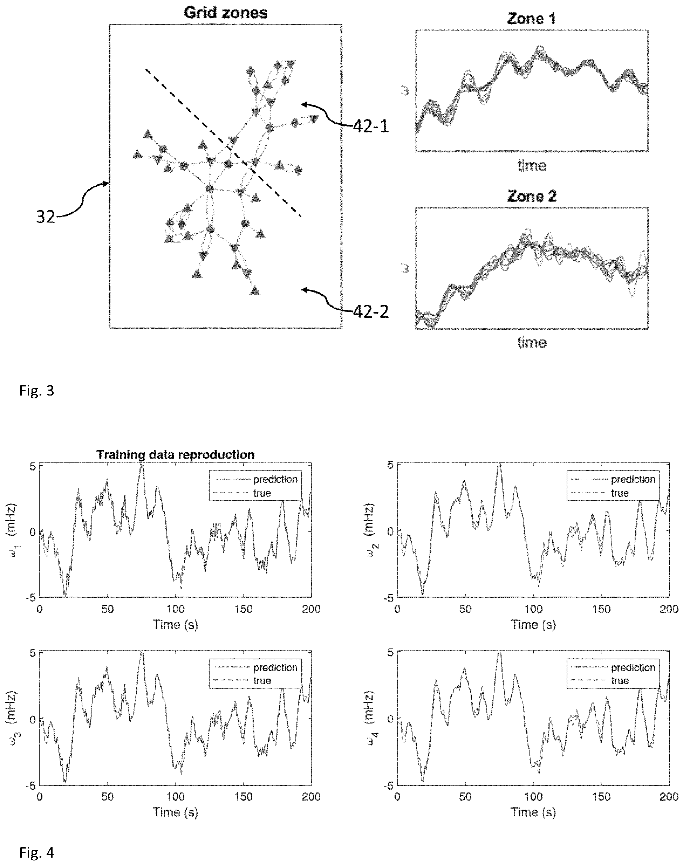

Fig. 3 shows a possible clustering. On the left, fig. 3 shows a power grid 32 divided into a first zone 42-1 and a second zone 42-2 by the dashed line. The frequency time series of each node can be seen on the right side of fig. 3 grouped according to the clustering (according to zones). It can be seen that the frequency time series of the nodes of the same cluster are more coherent than to the frequency time series of the nodes of the other cluster. Fig. 3 shows example results of the clustering algorithm applied to the Nordic32 test grid, with automatic selection of the number of clusters, which results in two zones identified for this power grid 32.

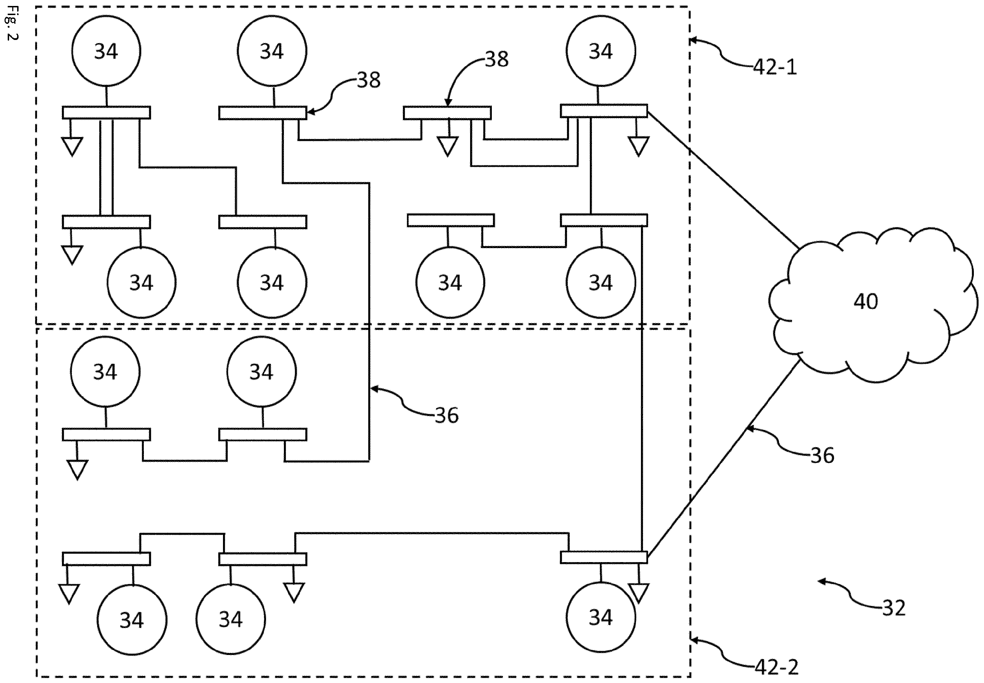

In some embodiments, the zone definition (clustering, which is the grouping of the nodes into clusters) is based on the coherency of frequency behavior in different zones of the power grid. Often, nodes that are electrically close exhibit coherent behavior, whereas electrically distant nodes can be expected to exhibit much less coherence. The set of nodes contained in each zone $i$ is denoted $Z_i$. These zones can be predefined based on a-priori knowledge or simple inspection of a single-line diagram as, for example, shown in fig. 2 or be defined using time series clustering techniques such as for example k-means as follows. Given the set of frequency measurement time series $\omega_i$ from each of the network nodes $k := 1 \ldots n$, it is further determined, which cluster (zone) each node belongs to. If the number of clusters is given, e.g., because it is selected by the user, initially the cluster centers are selected, which can be done in a number of ways, including randomly selecting certain measurement time series to be the cluster centers. Then, the clustering is performed by an iterative algorithm with each iteration having the following two steps:

> 1. Assignment step: Assign each measurement time series (node data) to the cluster, whose center has the smallest distance to this time series. The distance can be computed by e.g., using Euclidean distance or other metrics, which are applied to either raw time series or their processed version (with removed low-frequency trend, clipped duration, etc.).

> 2. Update step: Recalculate the center of each cluster, e.g., as the average over all time series currently assigned to the cluster (node data average).

The iterations continue until the time series assignments no longer change. If the number of clusters is not known beforehand, it can be selected by varying the number of clusters from the lower limit (e.g., 1) to the upper limit (e.g., the square root of n) and for each cluster number quantifying the clustering quality using a certain metric. An example metric is Calinski-Harabasz score, which is the ratio of the between-cluster separation to the within-cluster dispersion, normalized by their number of degrees of freedom. Having computed the score values for each number of clusters, the optimal number of clusters is selected to be the one with the best score.

At 14 of fig. 1, measurements are pre-processed in which the measurements are aggregated into zonal pseudo measurements (node data averages), representing individual parts of the network (clusters) in which the frequency variations can be expected to be coherent. The available power injection measurements from load and generation, and in the case of external networks where measurements are not available, tie-line flows into the observed area as shown in fig. 2, are summed to form zonal pseudo measurements (node data averages). Likewise, the available frequency measurements (node average data) from the zones are combined to create a single frequency pseudo measurement (grid node average data) e.g., by averaging them.

Defining the pseudo measurement (node data average) of each zonal frequency may be defined using the average of the available frequency time series in each zone:

$$\omega_i \;=\; \frac{1}{|Z_i|} \sum_{k \in Z_i} \omega_k.$$

Preferably, the frequency measurements originate from PMU measurements taken at nodes adjacent to the generators but could also originate from internal measurements of the generators.

Furthermore, the total power injections for each zone $i$ coming from the set of load nodes $\mathcal{L}_i$ ($L_i$) and generator nodes $\mathcal{G}_i$ ($G_i$) are constructed as

$$s_{l,i} = p_{l,i} + j q_{l,i} \quad = \quad \frac{1}{|\mathcal{L}_i|} \sum_{k \in \mathcal{L}_i} p_{l,k} + j q_{l,k}$$

$$s_{g,i} = p_{l,i} + j q_{l,i} \quad = \quad \frac{1}{|\mathcal{G}_i|} \sum_{k \in \mathcal{G}_i} p_{g,k} + j q_{g,k}$$

Furthermore, the model may be trained based on the equivalent admittance values that can be defined as

$$y_{l,i} = g_{l,i} + j b_{l,i} \quad = \quad \frac{1}{|\mathcal{L}_i|} \sum_{k \in \mathcal{L}_i} \frac{s^*_{l,k}}{|v_{l,k}|^2}$$

$$y_{g,i} = g_{g,i} + j b_{g,i} \quad = \quad \frac{1}{|\mathcal{G}_i|} \sum_{k \in \mathcal{G}_i} \frac{s^*_{g,k}}{|v_{l,k}|^2}$$

where * (star sign or asterix sign) denotes the complex conjugate. These pseudo measurements (node data averages) can be formed also using different formulations, but they preferably should represent the average of the frequency time series for each zone and the sum of the power injections or equivalent impedances.

In case the power system of interest has tie lines connecting it to external power systems (external network), whose detailed behavior is either unknown or irrelevant, the power flow measurements from the corresponding tie lines can be used to isolate the system of interest from external grids and only study its behavior. The external grids are then modeled as equivalent loads, whose consumption values are equal to the corresponding power flows through the tie lines.

At 16 of fig. 1, a training phase can be seen where the pseudo measurements (node data averages) are pre-processed and fed to a system identification or machine learning algorithm with the objective of creating a model that can be used to reproduce the behavior of the power network based on the collected frequency and power injection measurements (node data). This may produce a high-order linear model that can represent complex frequency dynamics including complex interactions between multiple networks. Additionally or alternatively, the model may represent inertia of zones 42 and/or the power grid 32. The application of the system identification or machine learning techniques may create an equivalent multiple-input, multiple-output (MIMO) model representing the frequency behavior in each zone as well as oscillations and disturbance propagation time between the zones. The steps 12, 14 and 16 make up the training phase.

The model training phase may be to select the node data averages (pseudo measurements) which could be done in different ways. Since a generator governor control can be considered slow compared to the background load variations, the frequency variations can be assumed to be driven primarily by the changes in the load. Therefore, possible inputs for the training of the model may be:

- active power measurements $p_{l,i}$ of each zone i;
- active and reactive power measurements $p_{l,i}$ and $q_{l,i}$ of each zone i;
- equivalent load conductance $g_{l,i}$ of each zone i; or
- equivalent load conductance $g_{l,i}$ and susceptance $b_{l,i}$ of each zone i.

Since the load can be considered to exhibit impedance like behavior in the short term, it may be advantageous to base the model training on the conductance rather than the active power. Moreover, the reactive power or susceptance may be included. This has the advantage that the load dependency on the voltage magnitude can be approximately modelled. The node data average (average frequency) of each zone may be selected as the output signal of the trained model. Let nz denote the number of zones. The resulting MIMO model has either nz or $2n_Z$ input signals denoted by $u$ and $n_Z$ output signals denoted by $y$, depending on whether the reactive power or susceptance pseudo measurements are used.

Once the input and output signals are selected, they may be detrended and lowpass-filtered to eliminate noise. The signals may then be passed to a system identification or machine learning routine to identify a model that can reproduce the output frequency variations (and/or inertia) when fed with the inputs used for identification. In some embodiments, subspace identification techniques are used to identify a linear state-space model on the so-called innovation form as follows:

$$x_{k+1} \quad = \quad Ax_k + Bu_k + Ke_k$$

$$y_k \quad = \quad Cx_k + Du_k + e_k$$

Here, $x_k$ represents an artificial n-dimensional system state vector at the sample time instant k, which may not be measured directly. The vectors $u_k$ and $y_k$ represent the *m* inputs and *l* outputs of the system, respectively. The real matrix A may describe the system eigendynamics, and the real matrices B, C, D may describe how inputs and outputs are related to the state, inputs and outputs of the system. The noise vector $e_k$ may be an unknown noise vector that is used to model process as well as measurement noise. Furthermore, the so-called Kalman gain matrix K may describe how process noise driving the system propagates into the system state, and can be used to model coloring of the process noise that acts on the system. This model may be an ideal representation to use in a multivariate approach, and can be used for bias-free estimation also in presence of non-white background load variations.

The quantities A, B, C, D, K and e(k) may be all outputs of the subspace algorithm (and consequently may not needed to be provided) - only y(k) and u(k) may be provided as input along with some parameters for model order selection etc. Allowing the additional degrees of freedom of how the unknown noise affects the system, has the advantage that bias free estimation of A,B,C,D (that may be used in further steps) can be obtained. Without K in the model, some bias can be expected if the load noise in different locations and times are not independent. e(k) may be always needed, the K matrix is optional but advantageous.

The system identification problem related to the form of the equations above (equations of $x_{k+1}$ and $y_k$) may consist of finding estimates of the system order n and the system matrices (A, B, C, D). The purpose of the Kalman gain matrix may be to allow additional degrees of freedom that can prevent bias in the system matrix estimates in case of non-Gaussian load variations. In some embodiments, the subspace identification algorithm MOESP may be employed to estimate the unknown model matrices. The objective may be to find a set of model matrices that can best reproduce the measured outputs when exposed to inputs used for training. Fig. 4 shows the results for a case when a network like in fig. 2 has been split into 4 zones and the estimated model order becomes 4.

A frequency response prediction phase can be seen at 18 of fig. 1, where a number of fictitious disturbances 22 are fed as the simulated input to the model 20 in order to produce frequency responses 24 that reflect those the system would experience if one or more of the disturbances 22 were to happen in reality. The disturbances 22 are preferably large disturbances. These predictions can be used by system operators to assess the vulnerability to disturbances (preferably large disturbance, but may also be other disturbances). In this manner, the constructed model 20 may be used to produce predictions of the frequency behavior in each zone, considering a list of credible disturbance such as generator, tie line or load outages in each zone.

The trained model 20 may establish the temporal and spatial propagation of disturbances in terms of power imbalance and frequency. There may be a much larger rate-of-change of frequency close to the disturbance compared to remote areas. Since the trained model 20 may be a MIMO model, it may also be used to model the differences in frequency deviations occurring between network regions (zones), which is a significant advantage compared to the previous approaches that approximated the network as single generator, implicitly assuming that the grid frequency remains spatially uniform across the grid following disturbances.

Predictions of the zonal frequency behavior may be computed based on the step response of the identified model of the equations above (equations of $x_{k+1}$ and $y_k$). For example, the frequency response to a loss of generation at a certain node can be predicted by first identifying which zone the generator belongs to and then applying a step to the corresponding input(s) of the model, and observing the frequency evolution in different zones. Similarly, the rate of change of frequency can be obtained from the impulse response of the trained model. Moreover, simultaneous disturbances in different regions can be simulated by applying multiple steps to different inputs. In addition, the same model can be augmented with filtered derivatives on each output to establish predictions of the corresponding rate-of-change of frequency. The predictions of grid frequency evolution following the outages of tie-lines and loads can obtained in the same manner.

Typically, power system operators are interested in predicting the frequency response to outages of each generator, load and tie line in the power system. For this purpose, their pre-disturbance values can be obtained from the input measurements (equations above of $s_{l,i}$, $s_{g,i}$, $y_{l,i}$, and $y_{g,i}$) in various ways, for example from the last measurement in the training window or an average over the training window. These values would then determine the size of the outage / disturbance, providing the scaling coefficient for the step response to compute the frequency evolution after the corresponding disturbance.

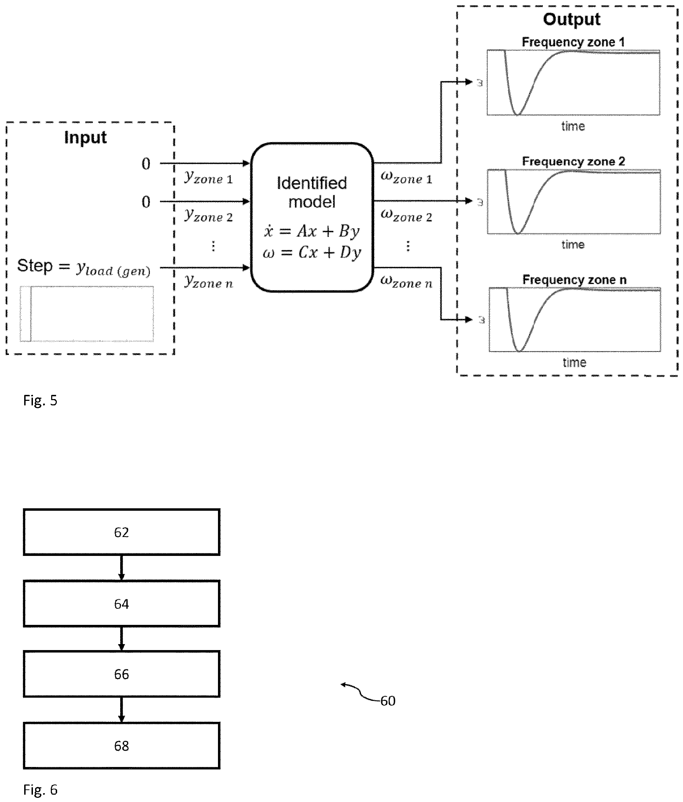

Fig. 5 shows predictions of frequency responses based on ambient data (pre-disturbed injections).

An inertia estimation phase can be seen at 26 in fig. 1, where the parameters of a single generator equivalent of each zone or the entire grid are computed through model reduction of the model 28 obtained in the training phase, or direct identification of a low-order model 28. Based on this low-order model 28, equivalent parameters such as inertia 30, governor steady state droop and time constant are identified. The model 30 may be the same or different to the model 20. In this manner, the model 28 may be reduced or a low-order model may be directly identified, typically a second-order model, which allows identification of equivalent zonal inertia as well as equivalent governor steady-state droop and governor time constant. Based on the low-order model, the system or zonal inertia required to keep frequency nadir above a certain threshold value and/or rate-of-change of frequency below a certain value may be identified.

Once the frequency response predictions are available, effective inertia of the power grid or its zones can be calculated using similar system identification approaches, as for the frequency response approach. For this purpose, the power grid or respective zone may be modeled as a single equivalent generator, with its inertia being equal to the inertia of the power grid/zone. The motivation for such a substitution may be to simplify the problem and reduce the number of unknowns: instead of computing the parameters such as inertia at every bus in the power grid/zone, only the aggregate values may be determined, which is something that the power system operator is ultimately interested in. The main equation used for the estimation may be the so-called swing equation, which relates the generator inertia and damping with the imbalance between the electrical energy demand in the power grid and mechanical energy coming from the prime mover:

$$2H\frac{d\Delta\omega}{dt} = \Delta P_m - \Delta P_e - D\Delta\omega$$

where H is the inertia, D is the damping, $\Delta$ denotes the deviation of a quantity from the pre-disturbance value, $P_m$ is the mechanical power applied to the turbine, $P_e$ is the total electrical demand including the tie line flows if the inertia is to be estimated per zone, $\omega$ and $\dot{\omega}$ are the frequency and its derivative, respectively. While $\Delta P_m$ may be not measured directly, it can be estimated by posing a first-order governor equation:

$$T\Delta P_m = -\Delta\frac{dP_m}{dt} - K\Delta\omega$$

where $T$ and $K$ are the governors time constant and gain, respectively.

To perform inertia estimation, for each zone the time series of average frequency (node data average) can be computed together with the total load. Here, active power may be used as this is the quantity that enters the swing equation. To improve the estimation accuracy, the active power losses can be added to calculate the total active power consumption. Similarly to the frequency response prediction, these quantities can be used as the input and output of the linear model, whose parameters can be identified. A preferred step may be to either enforce that the model is second order or identify a higher-order model first and then reduce it to the second order using any available technique. The transfer function of this model may then be given by

$$\Delta\omega(t) + a_1\Delta\omega(t-1) + a_2\Delta\omega(t-2) = b_1\Delta P(t-1) + b_2\Delta P(t-2) + e(t)$$

where t is the time step, e is the noise term, $\Delta P$ is the total electrical power deviation, and $a_1$, $a_2$, $b_1$, $b_2$ are the identified model coefficients. Then, the parameters of the equivalent generator can be determined through this unique mapping:

$$H = -\frac{t_s}{b_1}$$

$$D = -\frac{b_1 - b_2 + a_1 b_1}{b_1^2}$$

$$K = -\frac{a_2 b_1^2 + b_2^2 - a_1 b_1 b_2}{b_1^2 b_2 + b_1^3}$$

$$T = -\frac{b_1 t_s}{b_1 + b_2}$$

where $t_s$ is the measurement sampling rate. The estimated inertia of the equivalent generator then corresponds to the inertia of the grid or its area.

Fig. 2 shows a diagram of a power grid 32 and an external network 40. The grid 32 comprises generators and loads (both with the reference sign 34), nodes 38 (shown by elongated rectangles, not each of which is marked by the reference sign) and connections 36. Further, the triangles illustrate where (further) loads are connected, i.e. the site where the ambient load variation may be introduced. There is at least one generator and at least one load. Each node 38 may comprise a sensor to generate measurements (node data, frequency time series). In some embodiments, one or more nodes 38 do not comprise a sensor and hence do not generate frequency time series. Each generator and each load may have a corresponding node 38. It is possible that one or more generators, and/or one or more loads do not have a corresponding node 38. It is possible that there are one or more nodes 38 without corresponding generator or load. A first cluster of nodes 38 are in the first zone 42-1. A second cluster of nodes 38 are in the second zone 42-2. The nodes of the first and second cluster (and zone) are comprised by the power grid 32. There may be more than two zones. The external network 40 is connected to nodes of the power grid 32 with interconnections 36.

The current method may be based on subspace identification, however other identification techniques or machine learning methods could be used. Other types of equipment such as FACTS devices, HVDC links or energy storage units could be used in a similar way to what has been described for generators and loads. For this purpose, they may be modelled in the same way as generators.

Fig. 6 shows a method 60 for creating a model for predicting frequency responses in a power grid and/or for inertia estimation in the power grid. The method 60 comprises several steps. In step 62, a plurality of node data is acquired, wherein each of the plurality of node data represents a frequency time series at a corresponding node of a plurality of nodes of the power grid in an ambient state. Step 62 may correspond to 10 and/or 12 in fig. 1. In step 64, the plurality of nodes is grouped into clusters, wherein each of the clusters comprises at least one of the plurality of nodes. Step 64 may correspond to (a part of) 14 in fig. 1. In step 66, a node data average for each of the clusters is created based on the node data of the nodes comprised by the corresponding cluster. Step 66 may correspond to (a part of) 14 in fig. 1. In step 68, the model is created based on the node data averages. Step 68 may correspond to 16 in fig. 1.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for creating a model for predicting frequency responses in a power grid and/or for inertia estimation in the power grid, the method comprising:

   acquiring a plurality of node data, wherein each of the plurality of node data represents a frequency time series at a corresponding node of a plurality of nodes of the power grid in an ambient state;
   grouping the plurality of nodes into clusters, wherein each of the clusters comprises at least one of the plurality of nodes;
creating a node data key value for each of the clusters based on the node data of the nodes comprised by the corresponding cluster; and
creating the model based on the node data key values.

2. Method of claim 1, wherein the node data representing the frequency time series at the corresponding node of the power grid in the ambient state are node data of the power grid functioning without disturbances, wherein disturbances include generator outages, load outages and tie line outages.

3. Method of claim 1 or 2, wherein the plurality of node data is a plurality of measurements acquired by sensors, wherein each sensor corresponds to a corresponding node.

4. Method of claim 3, wherein the sensors are synchrophasor measurement units, PMUs.

5. Method of any of claims 1 to 4, wherein the plurality of node data represent frequency time series of time series of 5 to 15 minutes, preferably of 10 minutes; and/or
wherein plurality of node data represents frequency time series with an acquisition rate of 10 to 240 Hz.

6. Method of any of claims 1 to 5, wherein the plurality of node data further comprises ambient load data.

7. Method of any of claims 1 to 6, wherein the clusters correspond to connected local regions, wherein the nodes of a cluster are located in a corresponding connected local region, and wherein the node data of nodes of a same cluster are more coherent to each other than to node data of nodes of different clusters.

8. Method of any of claims 1 to 7, wherein a number of clusters is predefined or the method further comprises determining the number of clusters based on coherency of the frequency time series of the nodes.

9. Method of any of claims 1 to 8, wherein creating the node data key value for each of the clusters is a node data average for each of the clusters based on the node data of the nodes comprised by the corresponding cluster is done by averaging over all frequencies in the corresponding cluster.

10. Method of any of claims 1 to 9, further comprising acquiring a frequency time series representing an external network; and
wherein creating the model is further based on the frequency time series representing the external network.

11. Method of any of claims 1 to 10, wherein the model is a higher order linear model.

12. Method of any of claims 1 to 11, wherein creating the model based on the node data key values is done using sub-space identification, system identification or a machine learning algorithm.

13. Method of any of claims 1 to 12, further comprising predicting a frequency response of the power grid by applying a power grid disturbance to the model.

14. Method of claim 13, further comprising instructing the power grid based on the simulated frequency response.

15. Method of any of claims 1 to 13, further comprising determining inertia of at least one cluster of the power grid based on the model.

16. Method of claim 15, further comprising instructing the power grid based on the determined inertia.

17. A computer program product comprising instructions which, when the computer program is executed by a computer, cause the computer to carry out the method of any of claims 1 to 16.

18. A data processing apparatus comprising a processor configured to:

receive a plurality of node data, wherein each of the plurality of node data represents a frequency time series at a corresponding node of the power grid in an ambient state;
group the plurality of nodes into clusters, wherein each of the clusters comprises at least one of the plurality of nodes;

create node data key values for each of the clusters based on the node data of the nodes comprised by the corresponding cluster; and

create a model for predicting frequency responses in a power grid and/or for inertia estimation in the power grid based on the node data key values.

Fig. 1

Fig. 2

Fig. 3

Fig. 4

Fig. 5

Fig. 6

# EP 4 787 649 A1

## EUROPEAN SEARCH REPORT

Application Number

EP 25 15 5342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/278015 A1 (BUDHRAJA VIKRAM S [US] ET AL) 1 November 2012 (2012-11-01) | 1-7,11, 13,14, 17,18 | INV. H02J3/00 H02J13/00 |
| Y | * paragraph [0094] - paragraph [0096]; figure 6 * | 8,12,15, 16 | |
| A | * paragraphs [0079], [0123], [0118] - paragraph [0121]; figure 4 *<br>* paragraphs [0162], [0183], [0084], [0080] *<br>* paragraphs [0070], [0093] *<br>----- | 9,10 | |
| Y | WO 2020/130810 A1 (UNIV DELFT TECH [NL]) 25 June 2020 (2020-06-25)<br>* page 3, line 15 - line 39 *<br>----- | 8,12,15, 16 | |
| A | CN 114 498 770 B (UNIV TIANJIN) 24 September 2024 (2024-09-24)<br>* figure 1 *<br>----- | 1 | |
| A | BO LIU ET AL: "Virtual inertia and droop parameters quantitative determination method for VSC-HVDC in receiving-end area power systems with online inertia estimation based",<br>INTERNATIONAL JOURNAL OF CIRCUIT THEORY AND APPLICATIONS, JOHN WILEY & SONS, INC, HOBOKEN, USA,<br>vol. 52, no. 3,<br>25 September 2023 (2023-09-25), pages 1280-1301, XP072600026,<br>ISSN: 0098-9886, DOI: 10.1002/CTA.3810<br>* figure 1 *<br>----- | 1 | TECHNICAL FIELDS SEARCHED (IPC)<br><br>H02J |

The present search report has been drawn up for all claims

| Place of search | Date of completion of the search | Examiner |
|---|---|---|
| Munich | 16 May 2025 | Maucher, Bastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 5342

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| US 2012278015 | A1 | 01-11-2012 | US | 2005033481 A1 | 10-02-2005 |
| | | | US | 2010100250 A1 | 22-04-2010 |
| | | | US | 2012022707 A1 | 26-01-2012 |
| | | | US | 2012278015 A1 | 01-11-2012 |
| | | | US | 2013282314 A1 | 24-10-2013 |
| | | | US | 2016320435 A1 | 03-11-2016 |
| | | | WO | 2005015366 A2 | 17-02-2005 |
| WO 2020130810 | A1 | 25-06-2020 | NONE | | |
| CN 114498770 | B | 24-09-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4429060 A1